Europäisches Patentamt

European Patent Office

Office européen des brevets

(19)

(11) Veröffentlichungsnummer: **0 074 420**
**B1**

# (12) EUROPÄISCHE PATENTSCHRIFT

(45) Veröffentlichungstag der Patentschrift:
**19.02.86**

(21) Anmeldenummer: **81107196.8**

(22) Anmeldetag: **11.09.81**

(51) Int. Cl.⁴: **F 16 K 31/10**

(54) **Elektrohydraulisches Proportionalventil.**

(43) Veröffentlichungstag der Anmeldung:
**23.03.83 Patentblatt 83/12**

(45) Bekanntmachung des Hinweises auf die Patenterteilung:
**19.02.86 Patentblatt 86/8**

(84) Benannte Vertragsstaaten:
**AT BE CH DE FR GB IT LI LU NL SE**

(56) Entgegenhaltungen:
**DE - A - 2 149 915**
**GB - A - 416 244**
**US - A - 4 268 009**

**"und-oder-nor+steuerungstechnik",9/1979,K.KASPER-BAUER "Proportionalventile zur Steuerung von Geschwindigkeit und Druck",Seiten 45-76.**
**CONTROL REVUE,3/1980,E.SCHULTHESS "Proportional-Oelhydraulik bietet neue Steuer- und Regelmöglichkeiten",Seiten 18-21.**
**Prospekt "GOD Hydrauliksysteme",Firma Maschinenbau,Handels- und Service GmbH - München,Blätter D-6.1,6.2,6.3.**

(73) Patentinhaber: **Heilmeier & Weinlein Fabrik für Oel-Hydraulik GmbH & Co. KG, Neumarkter Strasse 26, D-8000 München 80 (DE)**

(72) Erfinder: **Brunner, Rudolf, Wankstrasse 23, D-8011 Baldham (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

ACTORUM AG

# Beschreibung

Die Erfindung betrifft ein elektrohydraulisches Proportionalventil der im Oberbegriff des Hauptanspruchs angegebenen Art, bekannt aus nachfolgendem Zeitschriftsartikel.

Aus der Zeitschrift «und-oder-nor + Steuerungstechnik», 9/1979, K. Kasperbauer, «Proportionalventile zur Steuerung von Geschwindigkeit und Druck», Seiten 75 und 76, sind elektrohydraulische Proportionalventile zur Steuerung von Geschwindigkeit und Druck eines Hydraulikmediums bekannt, wobei insbesondere ein kraftgeregelter Magnet als elektromagnetische Feder für den Ventilkörper wirkt. Kraftregelung des Magneten wird durch Stromveränderung bzw. auch Spannungsveränderung bewirkt. Der Magnet führt erst einen Hub aus, wenn der hydraulische Druck den Ventilkörper anhebt. Wie aus dieser Literaturstelle hervorgeht, ist ein solches Proportionalventil nur für eine indirekte Betätigung von Wege-, und Druck- und Stromventilen brauchbar, da es nur kleine Steuerölmengen verkraften kann. Es ist zwar das Produkt aus Hub × Kraft bei kraftgeregelten Magneten, insbesondere Gleichstrommagneten, konstant. Wenn jedoch der Hub gegen Null geht, müsste theoretisch die Kraft gegen Unendlich anwachsen. Dies geht aber in der Praxis nicht. Es sind deshalb für kleine Hübe und grosse Schliesskräfte Spezialmagneten erforderlich, die einen besonders hohen technischen Aufwand erfordern würden und zudem die Dimensionen des Proportionalventils in unzulässiger Weise vergrössern müssten. Dies ist auch der Grund dafür, dass elektrohydraulische Proportionalventile in der Regel nur als Vorsteuerventile für die eigentlichen Hauptsteuerventile eingesetzt werden. Es ist nämlich bisher keine Möglichkeit gefunden worden, mit kraftgeregelten Magneten auch bei kleinen Hüben extrem hohe Schliesskräfte für den Ventilkörper erzeugen zu können, damit auch im Hochdruckbereich und bei grossem Durchsatz eine einwandfreie Regelung oder Steuerung möglich wäre.

Aus einem Artikel der Zeitschrift «Control-Revue» 3/1980, E. Schulthess, «Proportional-Ölhydraulik bietet neue Steuer- und Regelmöglichkeiten», Seiten 18 bis 21, gehen verschiedene Anwendungsfälle für elektrohydraulische Proportionalventile hervor. Es zeigt sich hierbei immer, dass bei hohen Arbeitsdrücken und grösserem Durchsatz die Proportionalventile nur als Vorsteuerventile eingesetzt werden können, die mit verringertem Druck und/oder verringertem Durchsatz beaufschlagt werden. Bedingt ist dies wiederum dadurch, dass der Magnet hier unmittelbar auf den Ventilkörper einwirkt und deshalb nicht in der Lage sein kann, bei extrem kleinen Hüben des Ventilkörpers extrem grosse Kräfte aufzubringen. Dasselbe gilt für die elektrohydraulischen Proportionalventile, die aus dem Prospekt «GOD Hydrauliksysteme», Blätter D-6.1,6.2,6.3, der Firma Maschinenbau, Handels- und Service GmbH, München, bekannt sind und die ebenfalls infolge der direkten Betätigung der Ventilkörper vom Magneten nur als Vorsteuerventile verwendet werden. Allerdings ist bei diesen Proportionalventilen, die z.B. als Druckminder- oder als Druckbegrenzungsventil eingesetzt werden, zwischen den Magneten und dem Ventilkörper eine Feder eingeschaltet. Dies ändert aber nichts daran, dass der Magnet für den Schliesskörper bei kleinem Schliesskörperhub keine grosse Schliesskraft erzeugen kann.

Aus der DE-A-2 149 915 ist ein Proportionalventil bekannt, bei dem dem Schliesskörper ein Vorsteuerventil vorgesetzt ist, dessen Vorsteuerschliesskörper durch einen Proportionalmagneten in Öffnungsrichtung beaufschlagt wird, um die Öffnungsbewegung des Schliesskörpers des Proportionalventils zu steuern. Der Anker des Proportionalmagneten arbeitet gegen eine starke Rückholfeder und überträgt seinen Hub mittels eines Hebels auf einen Stössel, der den Vorsteuerventilschliesskörper in Öffnungsrichtung beaufschlagt.

Der Erfindung liegt die Aufgabe zugrunde, ein elektrohydraulisches Proportionalventil der eingangs genannten Art zu schaffen, das trotz Verwendung eines herkömmlichen Magneten mit üblicher Auslegung und üblicher Grösse in der Lage ist, auch bei hohen Arbeitsdrücken und grossem Durchsatz als Hauptsteuerventil eingesetzt zu werden.

Die gestellte Aufgabe wird erfindungsgemäss durch die im kennzeichnenden Teil des Hauptanspruchs angegebenen Merkmale gelöst.

Der kraftgeregelten Magneten für Proportionalventile anhaftende Nachteil wird hier nicht beseitigt, nämlich dass ein verhältnismässig schwacher Magnet bei kleinem Hub keine grosse Schliesskraft erzeugen kann, sondern es wird seine Eigenart, eine grössere Schliesskraft nur in Verbindung mit einem grössern Hub aufzubringen, durch den Übertragungshebel soweit den hydraulischen Anforderungen angepasst, dass daraus bei kleinem Arbeitshub des Ventilkörpers sehr hohe Schliesskräfte ableitbar werden. Der Übertragungshebel untersetzt den grossen Hub des Magneten in einen kleinen Hub für den Ventilkörper während er gleichzeitig aus einer relativ kleinen Magnetkraft eine hohe Schliesskraft für den Ventilkörper erzeugt.

Es ist zwar aus der GB-A-416 244 ein Ventil bekannt, bei dem zwischen dem Schliesskörper und dem Anker eines auf das Ventilgehäuse aufgesetzten Betätigungsmagneten ein zweiarmiger Hebel vorgesehen ist, der die Bewegungen des Ankers auf das Schliesselement überträgt. Jedoch dient der Betätigungsmagnet ausschliesslich dazu, über den zweiarmigen Hebel den Schliesskörper in seine Öffnungsstellung zu bewegen. In Schliessrichtung übt das Gewicht des Ankers über den zweiarmigen Hebel eine konstante Schliesskraft auf den Schliesskörper aus, entsprechend einer mit einem bestimmten Mass vorgespannten Feder.

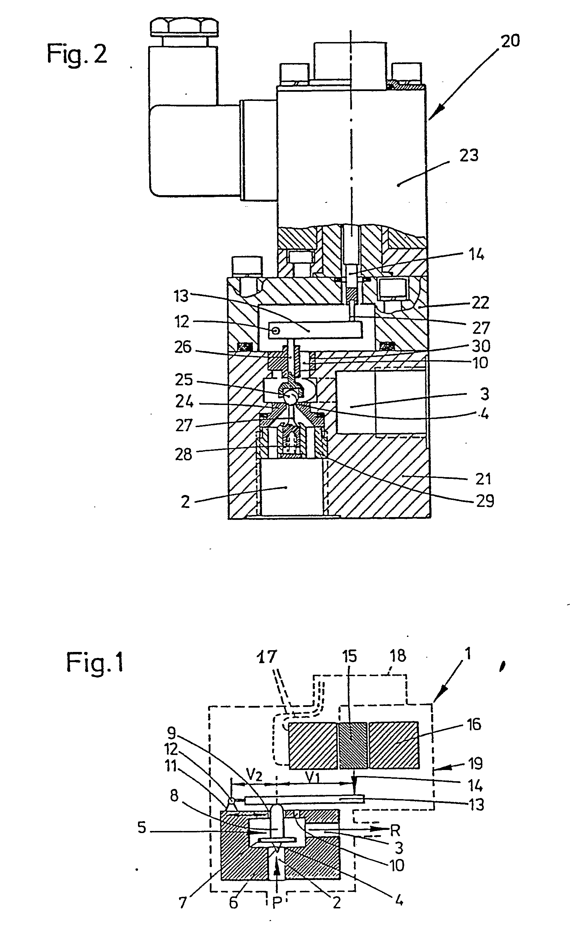

Damit der Übertragungshebel diese Funktion ausüben kann, ist es wichtig, wenn er gemäss Fig. 2 angeordnet und schwenkbar abgestützt ist.

Das Untersetzungsverhältnis, mit dem der Übertragungshebel arbeitet, lässt sich durch die seitliche Versetzung zwischen der Lagerstelle und dem Ventilkörper regulieren.

Zweckmässig ist ferner, wenn das Merkmal von Anspruch 3 gegeben ist. Hierbei greift der Magnet am Übertragungshebel mit einem wesentlich grösseren Hebelarm in Bezug auf die Lagerstelle des Übertragungshebels an, als der Ventilkörper, so dass die gewünschte Verkürzung des Arbeitshubes für den Schliesskörper bei gleichzeitiger Vergrösserung der Schliesskraft erzielt wird. In besonderen Anwendungsfällen wäre es natürlich auch denkbar, einen relativ kleinen Arbeitshub des Magneten bei grosser Magnetkraft durch den Übertragungshebel in einen grösseren Schliesshub für den Ventilkörper bei reduzierter Schliesskraft umzuwandeln.

Eine weitere, zweckmässige Ausführungsform der Erfindung erläutert Anspruch 4. Bei dieser Ausgestaltung wird ein guter Wirkungsgrad in der Kraftübertragung vom Magneten zum Ventilkörper erreicht. Seitlich gerichtete Komponenten werden, soweit es möglich ist, vermieden, und natürlich die damit verbundenen Reibungsverluste.

Eine baulich und herstellungstechnisch besonders einfache und preiswerte Ausführungsform der Erfindung erläutert Anspruch 5.

Die Balkenstärke ist zweckmässigerweise so bemessen, dass die Übertragung der Schliesskraft und des Hubes verfälschende Biegungen ausgeschlossen sind.

Zweckmässig ist ferner eine Ausführungsform, wie sie aus Anspruch 6 entnehmbar ist. Dadurch lässt sich eine lokale Trennung zwischen dem Ventilkörper und dem Magneten einerseits bewirken, zum anderen liegt zwischen dem Ende des Stiftes und dem Übersetzungshebel nur ein sehr kleiner Kontaktbereich vor, so dass die Reibungsverhältnisse hier vernachlässigbar sind.

Wichtig ist auch das Merkmal von Anspruch 7, da durch eine Verstellung der Lagerstelle des Übertragungshebels eine Veränderung der vom Magneten auf den Ventilkörper ausgeübten Schliesskraft und des Hubes möglich ist, ohne dass sich das Untersetzungsverhältnis verändert.

Alternativ oder additiv kann auch das Merkmal von Anspruch 8 vorgesehen sein, damit zusätzlich zur vorerwähnten Massnahme auch das Untersetzungsverhältnis unmittelbar geändert werden kann.

Eine vorteilhafte Ausführungsform schildert auch Anspruch 9. Die Ventilfeder sorgt hier dafür, dass kein Spiel zwischen den die Bewegungen übertragenden Elementen auftreten kann. Die Feder ersetzt hier andere, dafür üblicherweise verwendete Elemente.

Wichtig ist auch der in Anspruch 10 erläuterte Gedanke, nach dem das elektrohydraulische Proportionalventil gemäss der Erfindung als Hauptsteuerventil eingesetzt wird. Es liegt auf der Hand, dass sich dadurch eine Einsparung erzielen lässt, da kein Vorsteuerventil mit einem Hauptsteuerventil vorgesehen werden muss und da auch der Platz für das Vorsteuerventil eingespart werden kann. Infolge der erfindungsgemässen Ausbildung Proportionalventils kann die Steuerungscharakteristik des kraftgeregelten Magneten hervorragend auch zum direkten Regeln bei hohen Arbeitsdrücken oder/und grossen Durchsätzen in der zu überwachenden Leitung eingesetzt werden, was bisher nicht möglich war.

Ein bedeutsamer Gedanke der Erfindung ist schliesslich noch in Anspruch 11 enthalten. Die bekannten Proportionalventile haben nur Einfluss auf kleine Durchsätze, bei denen keine dynamischen Kräfte aus der Strömung entstehen, die das Regelverhalten des Proportionalventils negativ beeinflussen könnten. Das jeweils vom Proportionalventil vorgesteuerte Arbeitsventil hat hingegen so weit bemessene Durchgänge und eine entsprechend abgestimmte mechanische Konzeption, dass bei ihm ebenfalls dynamische Kräfte keinen nennenswerten Einfluss zeigen können. Bei der Verwendung des erfindungsgemäss ausgebildeten Proportionalventils in direktem Anschluss an die mit hohem Druck und wechselnden, bis zu 30 L/min und mehr erreichenden, Durchsatz beaufschlagte Leitung ergeben sich aber aus der Strömung dynamische Kräfte am Ventilkörper, die infolge des verhältnismässig engen Durchganges und dem kleinen Öffnungshubs die Kennlinie des Proportionalventils insofern beeinträchtigen könnten, als diese dann nicht mehr zuverlässig und unabhängig vom Leitungsdruck und Durchsatz den Abgabedruck regeln würde. Durch die Anordnung der Kompensationsfläche am Ventilkörper werden die dynamischen Kräfte aus der Strömung dazu benutzt, die Kennlinie des Proportionalventils zu begradigen, so dass diese unabhängig vom jeweiligen Leitungsdruck und Durchsatz arbeitet. Bei den bekannten Proportionalventilen ist zwar auch eine kragenartiger Flansch am Ventilkörper bekannt, jedoch dient dieser nur als Widerlager für eine oder mehrere Ventilfedern.

Ausführungsformen des Erfindungsgegenstandes werden nachstehend anhand der Zeichnung erläutert. Es zeigen:

Fig. 1 eine schematische Schnittansicht einer ersten Ausführungsform eines elektrohydraulischen Proportionalventils, und
Fig. 2 eine zweite Ausführungsform.

Gemäss Fig. 1 ist ein elektrohydraulisches Proportionalventil vorgesehen, das einen Druckmittelzuflusskanal 2 und einen Druckmittelabflusskanal 3 aufweist, die über einen Ventilsitz 4 miteinander verbunden sind. Mit dem Ventilsitz 4 arbeitet ein Ventilkörper 5 zusammen, der bei diesem Ausführungsbeispiel eine kegelförmige Spitze 6, einen hinter der Spitze liegenden, kragenartigen Ringflansch 7 und einen sich von diesem nach oben erstreckenden Schaft 8 besitzt. Zwischen dem Ventilsitz 4 und dem Flansch 7 kann eine Ventilfeder (nicht dargestellt) angeordnet sein, die den Ventilkörper in Öffnungsrichtung belastet. Der Schaft durchsetzt eine Bohrung 9 zu einem benachbarten Raum im mit 19 bezeichneten Gehäuse des Ventils, der zusätzlich noch über eine Ausgleichsbohrung 10 mit dem Raum hinter dem Ventilsitz 4 in Strömungsverbindung steht.

Auf einem Lagerbock 11 ist eine Schwenklagerstelle 12 für einen balkenartigen Übertragungshebel vorgesehen, der auf dem Ende des Schaftes 8 aufliegt und sich bis zu einem Betätigungselement 14 erstreckt, das von oben auf ihm lastet. Das Betätigungselement 14 gehört zu einem kraftgeregelten Magneten 15, der in einer Spule 16 auf- und ab-beweglich geführt ist. Die Spule 16 kann über Leitungen 17 wahlweise so erregt werden (mit Gleichstrom oder auch Wechselstrom), dass der Magnet 15 einen bestimmten Hub vollführt und dabei eine bestimmte Kraft ausübt. Solche Magneten sind üblicherweise dadurch gekennzeichnet, dass bei ihnen das Produkt aus Hub × Kraft konstant bleibt. Wenn allerdings der Hub zu klein wird, kann der Magnet die dieser Gleichung entsprechende hohe Kraft nur dann ausüben, wenn er ausserordentlich kräftig und damit grossbauend ausgebildet ist. Da jedoch hier der Übertragungshebel 13 den Arbeitshub des Magneten 15 verkleinert und dabei die von ihm ausgeübte Kraft vergrössert an den Ventilkörper 5 weitergibt, lässt sich für diesen auch bei extrem kleinem Hub eine ausserordentlich hohe Schliesskraft erreichen, so dass das Ventil als Hauptsteuerventil eingesetzt werden kann und bei einer Durchgangsweite von nur 3,2 mm im Bereich des Ventilsitzes 4 Arbeitsdrücke bis zu 300 bar bei einem Durchsatz bis zu 30 Liter/min. verarbeiten kann. Die Grösse der tatsächlichen Schliesskraft am Ventilkörper 5 ist abhängig von der Versetzung V2 zwischen dem Schwenklager 12 und dem Schaft 8 und lässt sich durch eine Verstellung des Lagerbockes 11 verändern. Die Gesamtuntersetzung sowohl des Hubes als auch der Kraft zwischen dem Magneten 15 und dem Ventilkörper 5 kann durch Veränderung der Versetzung V1 zwischen dem Magneten 15 und dem Ventilkörper 5 verändert werden.

Figur 2 zeigt eine andere Ausführungsform eines Proportionalventils 20, das aus einem Gehäuseunterteil 21, einem Gehäusemittelteil 22 und einem darauf aufgesetzten Gehäuseoberteil 23 besteht. Der Ventilsitz 4 wird durch einen Einsatz 24 in dem Zufluss gebildet. Der Ventilkörper besteht hier aus einer Kugel 25, die von einem becherförmigen Druckstück 26 gefasst wird, welches mit seiner Verlängerung durch einen Einsatz 30 hindurch gegen die Unterseite des Übertragungshebels 13 anliegt. Gegen die Kugel 25 drückt von unten ein Stössel 27, der unter der Kraft einer Ventilfeder 28 steht, welche in einem Einsatz 29 untergebracht ist und den Ventilkörper 26, 26 gegen den Hebel 13 presst. Dieser wird durch diese Kraft wiederum gegen einen Stift 27 am Betätigungselement 14 des Magneten 15 angelegt, so dass kein Spiel zwischen den einzelnen, zusammenarbeitenden Teilen entstehen kann.

Die Unterseite des Flansches 7 (Fig. 1) oder die Unterseite des becherförmigen Druckstückes 26 (Fig. 2) bilden quer zur Strömungsrichtung durch den Ventilsitz 4 verlaufende Kompensationsflächen, an denen dynamische Kräfte aus der Druckmittelströmung angreifen. Diese Kräfte überlagern sich mit den statischen Kräften und führen zu dem wünschenswerten Vorteil einer annähernd geraden Kennlinie für das Proportionalventil, d.h., dieses regelt dann den eingestellten Druck nahezu vollständig unabhängig vom Druck in der zu überwachenden Leitung und auch vom jeweiligen Durchsatz.

**Patentansprüche**

1. Elektrohydraulisches Proportionalventil, mit einem kraftgeregelten Magneten, d.h. mit einem Magneten dessen Magnetkraft durch Veränderung des Stromes oder der Spannung gesteuert wird, der zur Beeinflussung der Ventilschliesskraft und des Hubes auf einen Schliesskörper (5; 25, 26) einwirkt, der in einem Gehäusedurchgang zwischen einem Druckmittelzufluss (2) und einem -abfluss (3) angeordnet ist, dadurch gekennzeichnet, dass zwischen dem Magneten (15) und dem Schliesskörper (5; 25, 26) ein Übertragungshebel (13) angeordnet ist, der direkt auf den Schliesskörper des Proportionalventils einwirkt und mit dem bei relativ kleiner Magnetkraft ein relativ grosser Magnethub in eine relativ grosse Schliesskraft bei relativ kleinem Hub des Schliesskörpers umwandelbar ist.

2. Elektrohydraulisches Proportionalventil nach Anspruch 1, dadurch gekennzeichnet, dass der Übertragungshebel (13) in einer gehäusefesten Lagerstelle (12, 11) schwenkbar abgestützt ist, die gegenüber dem Schliesskörper (5; 25, 26) seitlich versetzt ist.

3. Elektrohydraulisches Proportionalventil nach den Ansprüchen 1 oder 2, dadurch gekennzeichnet, dass der Magnet (15) am Übertragungshebel (13) zum Schliesskörper (5; 25, 26) relativ seitlich versetzt angreift.

4. Elektrohydraulisches Proportionalventil nach den Ansprüchen 1 bis 3, dadurch gekennzeichnet, dass der Übertragungshebel (13) durch ein Betätigungselement (14, 27) des Magneten (15) in einer Ebene verschwenkbar ist, in der die Hubbewegung des Schliesskörpers (5; 25) erfolgt, und dass der Übertragungshebel den Schliesskörper zwischen seiner Schwenklagerstelle (12) und dem Angriffsbereich des Betätigungselementes (14) beaufschlagt.

5. Elektrohydraulisches Proportionalventil nach den Ansprüchen 1 bis 4, dadurch gekennzeichnet, dass der Übertragungshebel (13) balkenförmig ausgebildet ist und mit seiner Unterseite auf dem Schliesskörper (5) oder einem an diesem angreifenden Element (26) aufliegt, und dass auf seiner Oberseite das Betätigungselement (14, 27) oder der Magnet (15) aufliegt.

6. Elektrohydraulisches Proportionalventil nach den Ansprüchen 4 und 5, dadurch gekennzeichnet, dass das Betätigungselement ein Druckstift (27) ist.

7. Elektrohydraulisches Proportionalventil nach den Ansprüchen 1 bis 6, dadurch gekennzeichnet, dass die Lagerstelle (11, 12) des Übertragungshebels (13) verstellbar ist.

8. Elektrohydraulisches Proportionalventil nach Anspruch 2, dadurch gekennzeichnet, dass das Mass der Versetzung (V1) zwischen dem Schliesskörper (5) und dem Magneten (15) veränderbar ist.

9. Elektrohydraulisches Proportionalventil nach den Ansprüchen 1 bis 8, dadurch gekennzeichnet, dass den Schliesskörper (25, 26) eine Feder (28) in Öffnungsrichtung belastet, die den Schliesskörper in Anlage am Übertragungshebel (13) und diesen in Anlage am Magneten oder dessen Betätigungselement hält.

10. Verwendung des elektrohydraulischen Proportionalventils gemäss den Ansprüchen 1 bis 9 als Hauptsteuerventil, das ohne Zwischenschaltung eines Vorsteuerventils zur Druckregelung bzw. Druckminderung direkt an die zu überwachende Leitung angeschlossen ist.

11. Elektrohydraulisches Proportionalventil nach den Ansprüchen 1 bis 10, dadurch gekennzeichnet, dass am Schliesskörper (5; 25, 26) eine in etwa quer zur Durchströmrichtung durch den Ventilsitz (4) verlaufende Kompensationsfläche (7) für dynamische Strömungskräfte bei sich änderndem Durchsatz vorgesehen ist.

**Claims**

1. An electro-hydraulic proportional valve comprising a variable-force solenoid, i.e. a solenoid the magnetic force of which is controlled by varying the current or the voltage, acting on a valve body (5; 25, 26) disposed in a housing passage between a pressure fluid inlet port (2) and an outlet port (3) for controlling the valve closing force and the stroke thereof, characterized in that between said solenoid (15) and said valve body (5; 25, 26) there is provided a transmission lever (13) acting directly on said valve body of said proportional valve so as to convert a relatively small magnetic force with a relatively long solenoid stroke into a relatively strong closing force with a relatively short stroke of said valve body.

2. An electro-hydraulic proportional valve according to claim 1, characterized in that said transmission lever (13) is pivotally mounted in abearing portion (12, 11) integrally connected to the housing at a laterally offset position with respect to said valve body (5; 25, 26).

3. An electro-hydraulic proportional valve according to claims 1 or 2, characterized in that said solenoid (15) engages said transmission lever (13) at a laterally offset position with respect to said valve body (5; 25, 26).

4. An electro-hydraulic proportional valve according to claims 1 to 3, characterized in that said transmission lever (13) is adapted to be pivoted by an actuating element (14, 27) of said solenoid (15) in a plane in which the stroke displacement of said valve body (5; 25) occurs, and that said transmission lever engages said valve body at a position between its pivotal mounting (12) and the engagement position of said actuating element (14).

5. An electro-hydraulic proportional valve according to claims 1 to 4, characterized in that said transmission lever (13) is formed as a beam supported at its bottom side on said valve body (5) or on an element (26) in engagement therewith and that its upper side is engaged from above by said actuating element (14, 27) or said solenoid (15).

6. An electro-hydraulic proportional valve according to claims 4 and 5, characterized in that said actuating element is a pressure pin (27).

7. An electro-hydraulic proportional valve according to claims 1 to 6, characterized in that said bearing portion (11, 12) of said transmission lever (13) is adjustable.

8. An electro-hydraulic proportional valve according to claim 2, characterized in that the amount of offset (V1) between said valve body (5) and said solenoid (15) is adjustable.

9. An electro-hydraulic proportional valve according to claims 1 to 8, characterized in that said valve body (25, 26) is biased in the opening direction by a spring (28) holding said valve body in engagement with said transmission lever (13) and said transmission lever in engagement with said solenoid or its actuating element.

10. Use of the electro-hydraulic proportional valve according to claims 1 to 9 as a main control valve directly connected to the conduit to be controlled without interposition of a pre-control valve for pressure control or pressure reduction, respectively.

11. An electro-hydraulic proportional valve according to claims 1 to 10, characterized in that said valve body (5; 25, 26) ist formed with a compensation surface (7) extending approximately transverse of the direction of flow through the valve seat (4) for compensating dynamic flow forces at varying flow rates.

**Revendications**

Valve proportionnelle électrohydraulique avec un aimant à réglage de force, c'est-à-dire dont la force est réglée par une variation de courant ou de tension, cet aimant agissant sur un corps de fermeture (5; 25, 26), prévu dans un orifice de la cage entre un conduit d'admission (2) et d'évacuation (3) du fluide sous pression, pour en influencer la force de fermeture et la course, caractérisée en ce qu'un levier de transmission (13), monté entre l'aimant (15) et le corps précité (5; 25, 26), agit directement sur ce dernier et permet de transformer une course relativement importante de l'aimant, pour une force assez faible de ce dernier, en une force de fermeture relativement élevée, pour une course assez faible du corps de fermeture.

2. Valve proportionnelle électrohydraulique suivant la revendication 1, caractérisée en ce que le levier de transmission (13) présente un appui pivotant sur un support (12, 11) fixé dans la cage et déporté latéralement par rapport au corps de fermeture (5; 25, 26).

3. Valve proportionnelle électrohydraulique suivant une des revendications 1 et 2, caractérisée en ce que l'aimant (15) attaque le levier de transmission (13) avec un déport latéral par rapport au corps de fermeture (5; 25, 26).

4. Valve proportionnelle électrohydraulique suivant une quelconque des revendications 1 à 3, caractérisée en ce qu'un élément de commande (14; 27) de l'aimant (15) fait pivoter le levier de transmission (13) dans le plan où s'effectue la course du corps de fermeture (5; 25) et en ce que le levier de transmission sollicite le corps précité entre son point d'appui (12) et la zone d'attaque de l'élément de commande (14).

5. Valve proportionnelle électrohydraulique suivant une quelconque des revendications 1 à 4, caractérisée en ce que la face inférieure du levier de transmission (13), réalisé en forme de barre, s'appuie sur le corps de fermeture (5) ou sur un élément (26) attaquant ce dernier, et en ce que l'élément de commande (14; 27) ou l'aimant (15) s'appuient sur la face supérieure de ce même levier.

6. Valve proportionnelle électrohydraulique suivant une des revendications 4 et 5, caractérisée en ce que l'élément de commande est représenté par une tige (27).

7. Valve proportionnelle électrohydraulique suivant une quelconque des revendications 1 à 6, caractérisée en ce que le support (11, 12) du levier de transmission (13) présente une possibilité de déplacement.

8. Valve proportionnelle électrohydraulique suivant la revendication 2, caractérisée en ce que la valeur du déport (V1) entre le corps de fermeture (5) et l'aimant (15) peut être modifiée.

9. Valve proportionnelle électrohydraulique suivant une quelconque des revendications 1 à 8, caractérisée en ce qu'un ressort (28), qui sollicite le corps de fermeture (25, 26) dans le sens d'ouverture, maintient le corps précité au contact du levier de transmission (13), ce dernier étant maintenu au contact de l'aimant ou de son élément de commande.

10. Utilisation de la valve proportionnelle électrohydraulique, suivant une quelconque des revendications 1 à 9, comme vanne-pilote principale raccordée directement à la conduite à contrôler, sans l'insertion d'une soupape pilote de régulation et/ou réduction de pression.

11. Valve proportionnelle électrohydraulique suivant une quelconque des revendications 1 à 10, caractérisée en ce que le corps de fermeture (5; 25, 26) présente une surface de compensation (7) pour les forces hydrodynamiques engendrées par un débit variable, cette surface étant pratiquement transversale au sens d'écoulement dans le siège de soupape (4).

Fig. 2

Fig.1